Europäisches Patentamt

European Patent Office

Office européen des brevets

(19)

(11) Publication number: **0 039 221 B1**

# EUROPEAN PATENT SPECIFICATION

(45) Date of publication of patent specification: **15.10.86**

(51) Int. Cl.⁴: **H 01 G 9/05**

(21) Application number: **81301821.5**

(22) Date of filing: **24.04.81**

(54) Solid tantalum capacitor having a riser and welded lead and production thereof.

(30) Priority: **25.04.80 US 143692**

(43) Date of publication of application:
**04.11.81 Bulletin 81/44**

(45) Publication of the grant of the patent:
**15.10.86 Bulletin 86/42**

(84) Designated Contracting States:
**BE DE FR GB IT NL**

(56) References cited:
**DE-C- 891 571**
**US-A-3 956 676**
**US-A-3 967 000**

(73) Proprietor: **SPRAGUE ELECTRIC COMPANY**
**North Adams Massachusetts 01247 (US)**

(72) Inventor: **Webber, Dean Allen**
**West Road**
**Waterboro Maine 04087 (US)**
Inventor: **Bosse, Peter Sebastian**
**Bauneg Beg Lake**
**Sanford Maine 04073 (US)**

(74) Representative: **Spencer, Graham Easdale et al**
**A.A. Thornton & Co Northumberland House**
**303-306, High Holborn**
**London WC1V 7LE (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention is concerned with a solid tantalum capacitor having a riser extending therefrom and an external lead welded to the riser, and with a method of making such a capacitor.

Prior art solid tantalum capacitors conventionally comprise an anode of tantalum, a riser of tantalum joined to the anode and extending therefrom for attachment to an external lead, and dielectric and conductive cathode layers overlying the anode. The connection between the riser and the external lead of such a capacitor must be free of the several layers that overlie the anode. However, the common commercial methods for producing solid tantalum capacitors involve batch handling and pyrolytic conversions that result in deposition of at least some part of the several cathode layers on to the riser.

Prior art welding of an external lead to the riser through the overlying layers has been difficult to accomplish and has often resulted in leakage paths between the riser (anode) and the solid electrolyte layer (cathode). The problem has become increasingly severe with the demand for lower inductance capacitors, which demands are met by shortening the riser, as by welding the external lead to the riser closer to the anode. However, in welding closer to the anode, there is greater chance for leakage by bridging from the riser to the cathode layers.

Various methods have been employed in the prior art to avoid leakage paths between anode risers and cathode layers, generally involving some form of mechanical removal of the overlying layers, for example sand-blasting of the risers. These prior art methods have been costly and time-consuming, have not provided a clean weld area in a significant percentage of units, and frequently even have intermingled the overlying layers to the extent of forming, rather than eliminating, leakage paths.

We have now developed a solid tantalum capacitor of the kind described which has no leakage path between riser and cathode and in which there is a metal-to-metal weld between the riser and the external lead. These features are obtained by cleaning the area around the site of the weld between the riser and the external lead by means of a laser beam.

According to one aspect of the present invention, therefore, there is provided a solid tantalum capacitor having a tantalum anode with a riser extending therefrom, an external lead welded to the riser, a dielectric layer on the anode and the riser, and a manganese dioxide solid electrolyte layer on the dielectric layer, characterised in that the weld between the riser and the lead is bare metal to bare metal, an area of the riser at the site of the weld being free of the dielectric layer and a greater area of the riser being free of the solid electrolyte layer, and the solid electrolyte layer adjacent said electrolyte-free area being a lower oxide of manganese having a low conductivity.

According to another aspect of the present invention, there is provided a method of making a solid tantalum capacitor having a tantalum anode with a riser extending therefrom, an external lead welded to the riser, a dielectric layer on the anode and the riser, and a manganese dioxide solid electrolyte layer on the dielectric layer, characterised in that an area around the weld site of the riser to the external lead is cleaned free of the dielectric layer and a greater area of the riser is cleaned free of the solid electrolyte layer, by directing a laser beam on to said area so as to volatilise the dielectric and the solid electrolyte at said site and to convert the solid electrolyte on the fringe of said electrolyte-free area to a lower oxide of manganese having a low conductivity, and then the external lead is welded to the riser at said weld site.

Further features and advantages of the present invention will appear from the following description of preferred embodiments thereof given by way of example and with reference to the accompanying drawings, in which:

Figure 1 is a partial axial section of a solid tantalum capacitor prior to cleaning and welding of the riser,

Figure 2 is a partial axial section of the solid tantalum capacitor of Figure 1 after having been cleaned and welded in accordance with prior art practices,

Figure 3 is a partial axial section of the solid tantalum capacitor of Figure 1 after having been cleaned and welded in accordance with this invention,

Figure 4 is a schematic representation of an embodiment of a laser cleaning configuration used according to the invention, and

Figure 5 is a schematic representation of the preferred laser cleaning configuration used according to the invention.

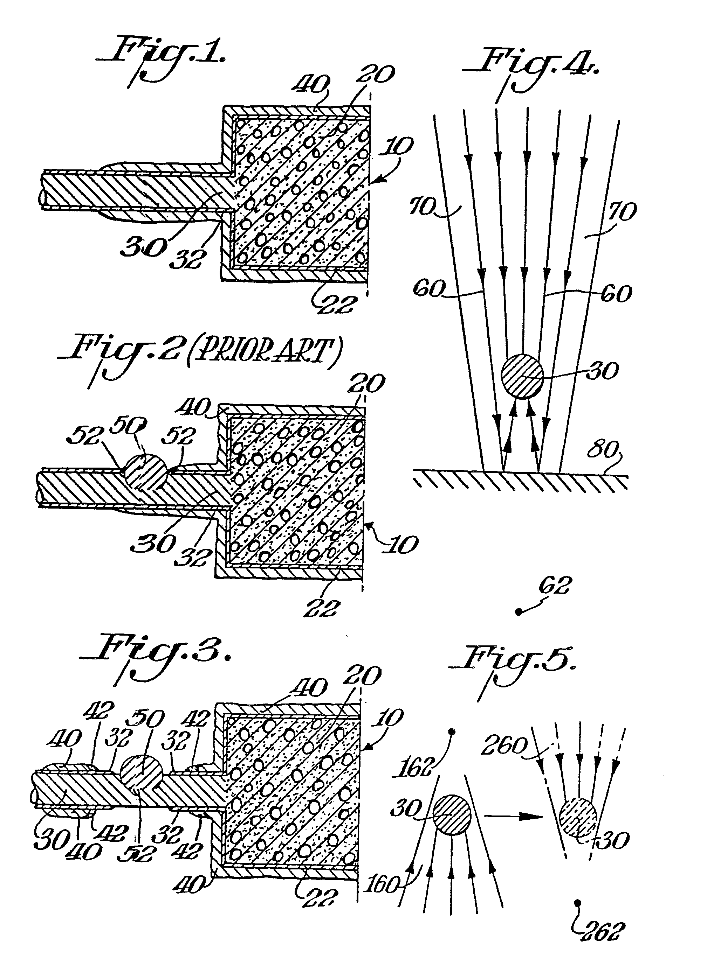

Figure 1 shows an axial section of a typical solid tantalum capacitor 10. A porous pellet 20 of tantalum powder has a riser wire 30 of tantalum joined to it, as by welding thereto or by being embedded therein. The riser 30 is used during the processing and later use of the capacitor 10 as the electrical contact to the anode pellet 20.

As is well known in the art, solid tantalum capacitors are produced in batches. Typical manufacturing processes use carrier bars from which a plurality of pellets are suspended by their risers. A plurality of carrier bars are spaced apart in racks for mass handling during the several steps in the processing of the conventional dielectric and conductive cathode layers on the pellets. A typical process is described in U.S. Patent 3,843,492.

Dielectric oxide layers 22 and 32 ($Ta_2O_5$) are formed on the pellet 20 and riser 30, respectively, for example by anodization. A solid electrolyte layer 40 ($MnO_2$) is formed over the oxide layers 22 and 32, as by deposition of a precursor ($Mn(NO_3)_2$) and pyrolytic conversion to the dioxide. The conditions of the formation of the solid electrolyte require that the oxide layer 32 should extend outwardly along the riser 30 so as to ensure that the solid electrolyte layer 40 which forms up the riser 30 does not contact the bare tantalum surface of the riser. However, the inductance requirements for solid tantalum capacitors demand that the riser 30 be joined to any external lead close to the pellet. Hence, coatings 32 and 40 must be removed from riser 30 in the area of the weld in order to ensure an ohmic contact to the external lead and the elimination of leakage paths from the coating 40 to the riser 30.

Figure 2 shows a typical prior art weld between the riser 30 and an external lead 50. Bare metal to bare metal contact has been established between the riser and the lead, as is the case with the better prior art welding methods. However, leakage paths 52 have been left whereby part of the solid electrolyte layer 40 has been left to bridge the dielectric layer 32 and provide a low resistance contact to the riser 30.

Figure 3 shows the weld between the riser 30 and the external lead 50 that is obtained according to the invention. The solid electrolyte layer 40 has been removed over a greater area than the area of removal of the dielectric layer 32, thereby substantially reducing the likelihood of leakage paths between riser weld and the solid electrolyte cathode. In addition, the fringe 42 of the solid electrolyte layer 40 around the area of removal has been reduced to a lower oxide of manganese which is insulating or very low conductivity material ($MnO_x$ probably $Mn_2O_3$). This reduction to $Mn_2O_3$ has been described in the tantalum capacitor literature by Smyth in *J. Electrochem. Soc., 113*, pp. 19—24 (Jan. 1966).

Removal of a greater area of the layer 40 than of the layer 32 establishes a greatly extended path over which any leakage between anode and cathode potentials in the capacitor 10 would have to occur. Conversion of the fringe 42 of the layer 40 around the removal area into a non-conducting species further eliminates the chances of a leakage path being established between anode and cathode potentials.

Cleaning of the riser 30 in accordance with this invention so as to produce the structure shown in Figure 3 is accomplished by directing a laser beam on to the riser. There are a number of variables within the scope of this invention, including the strength of the beam and the duration of contact of the beam on the riser. The number of laser beams directed at the riser, relative movement between the laser and the riser, and the welding of the riser to an external lead are all elective without departing from the concept of this invention.

Figure 4 shows diagrammatically one method of laser removal of selected areas of the overlying layers 40 and 32 from the riser 30. A single laser beam 60 is directed at a stationary riser 30 with a coaxial air stream 70 surrounding the beam 60. A reflecting surface 80 is provided to direct beam 60 back on to the riser 30, thereby ensuring cleaning of a band completely around the riser. The beam 60 has a long focal length (approx. 5 inches) and is focussed at a point 62 beyond the reflecting surface 80 to facilitate the reflective cleaning of the underside of the riser 30.

The laser beam 60 cleans the facing surface of the riser 30 when it first strikes it. The coaxial air stream 70 carries the heat of the beam partially around the riser, so cleaning the sides, and the reflection from the "mirror" 80 underneath the riser comes back and cleans the underside of the riser.

Figure 5 shows diagrammatically the preferred arrangement wherein a pair of laser beams 160 and 260 are directed on to opposite surfaces of the riser 30 as the riser passes with a continuous and constant motion through the beams. It has been found that the use of multiple beams enables the use of a coaxial air flow (which was found to be desirable for a single laser beam) to be dispensed with. Focusing of the beams at 162 and 262 beyond the riser target is utilized to ensure removal of all coatings from completely around the riser, without the need to use mirrors between the focuses and the riser 30. Although reflective mirrors are usable in this embodiment, it is preferred not to use mirrors because in this equipment configuration they become dirty rather quickly and require frequent stopping of the equipment in order to clean them.

In the preferred embodiment of Figure 5, the laser beams 160 and 260 are operated continuously and a succession of risers (capacitor bodies) are passed through beams at a continuous and constant rate by conventional transport means. It has been found that $CO_2$ laser beams of 150 watts strength permit the passage of the risers at a constant feed rate of three inches per second (7.6 cm/sec).

Laser beams 160 and 260 are shown as being directed perpendicular to the line of passage of the risers 30 through the beams. Directing the beams at an angle to the risers permits additional control over the beam coverage of the riser. Passing the risers through the beams at about 0.4 inch (10 mm) from the focal point of beams having focal lengths of 5 inches (127 mm) has been found to clean about 45 mils (1.15 mm) of $MnO_2$ and about 30 mils (0.76 mm) of $Ta_2O_5$ from the risers, and to produce about 5 mils (0.13 mm) of fringe of converted $MnO_x$.

Although the preferred embodiment of this invention has been described in terms of a $CO_2$ laser, it is within the scope of this invention to utilize a glass laser, a YAG laser, or other continuous beam laser. Simplicity of continuous production equipment makes a continuous beam laser preferred over a pulsed system.

In a like manner, it is preferred that the risers should pass through the laser beams in a continuous motion. However, it will be recognized by those skilled in production equipment that the risers may proceed in a stepped or indexed motion under the beams.

The external lead 50 is shown in Figure 3 as being joined to riser 30 in a weld 52 which is substantially midway in the cleaned portion of the riser, so as to ensure maximum separation from

the $MnO_2$ surface. The weld 52 is preferably made by use of a conventional resistance welder since resistance welding is both fast and reproducible. However, the weld 52 may be effected by the same laser beam that is used to clean the riser 30 or by a third laser beam in the continuous motion embodiment of Figure 5.

The known use of polytetrafluoroethylene and/ or other organic coatings on the riser in order to control the extent of wetting during the production of the solid electrolyte may be eliminated by employing the laser cleaning method of this invention. However, the laser beam method as described herein has been found to remove all organics that may be present on the riser.

## Claims

1. A solid tantalum capacitor having a tantalum anode with a riser extending therefrom, an external lead welded to the riser, a dielectric layer on the anode and the riser, and a manganese dioxide solid electrolyte layer on the dielectric layer, characterised in that the weld between the riser and the lead is bare metal to bare metal, an area of the riser at the site of the weld being free of the dielectric layer and a greater area of the riser being free of the solid electrolyte layer, and the solid electrolyte layer adjacent said electrolyte-free area being a lower oxide of manganese having a low conductivity.

2. A solid tantalum capacitor according to claim 1, characterised in that said free area extends completely around the periphery of the riser.

3. A method of making a solid tantalum capacitor having a tantalum anode with a riser extending therefrom, an external lead welded to the riser, a dielectric layer on the anode and the riser, and a manganese dioxide solid electrolyte layer on the dielectric layer, characterised in that an area around the weld site of the riser to the external lead is cleaned free of the dielectric layer and a greater area of the riser is cleaned free of the solid electrolyte layer, by directing a laser beam on to said area so as to volatilise the dielectric and the solid electrolyte at said site and to convert the solid electrolyte on the fringe of said electrolyte-free area to a lower oxide of manganese having a low conductivity, and then the external lead is welded to the riser at said weld site.

4. A method according to claim 3, characterised in that the laser beam is directed at said area together with a coaxial air stream.

5. A method according to claim 3 or 4, characterised in that the laser beam is reflected back on to the riser so as to clean completely around the periphery of the riser.

6. A method according to claim 3 or 4, characterised in that a second laser beam is directed on to the riser opposite the weld site.

7. A method according to any of claims 3 to 6, characterised in that the welding of the lead to the riser is effected by the laser beam.

## Revendications

1. Condensateur au tantale à électrolyte solide ayant une anode de tantale avec un plot qui en dépasse, un fil externe de connexion soudé au plot, une couche diélectrique placée sur l'anode et le plot, et une couche d'électrolyte solide à base de bioxyde de manganèse formée sur la couche diélectrique, caractérisé en ce que la soudure entre le plot et le fil de connexion est formée métal nu sur métal nu, une zone du plot à l'emplacement de la soudure étant débarrassée de la couche diélectrique et une plus grande zone du plot étant débarrassée de la couche d'électrolyte solide, la couche d'électrolyte solide, près de la zone débarrassée d'électrolyte solide, est formée d'un oxyde de manganèse, ayant une faible conductivité.

2. Condensateur au tantale à électrolyte solide selon la revendication 1, caractérisé en ce que ladite zone libre est disposée totalement autour de la périphérie du plot.

3. Procédé de fabrication d'un condensateur au tantale à électrolyte solide ayant une anode de tantale dont dépasse un plot, un fil externe de connexion soudé au plot, une couche diélectrique placée sur l'anode et le plot, et une couche d'électrolyte solide à base de bioxyde de manganèse placée sur la couche diélectrique, caractérisé en ce qu'une zone placée autour de l'endroit de la soudure du plot sur le fil externe est débarrassée de la couche diélectrique et une plus grande zone du plot est débarrassée de la couche d'électrolyte solide, par projection d'une faisceau laser sur ladite zone afin que le diélectrique et l'électrolyte solide soient volatilisés à cet endroit et afin que l'électrolyte solide se trouvant sur la frange de la zone dépourvue d'électrolyte soit transformé en un oxyde inférieur de manganèse ayant une faible conductivité, et le fil externe est ensuite soudé sur le plot à l'endroit du soudage.

4. Procédé selon la revendication 3, caractérisé en ce que le faisceau laser est dirigé sur cette zone avec un courant d'air coaxial.

5. Procédé selon l'une des revendications 3 et 4, caractérisé en ce que le faisceau laser est réfléchi vers le plot afin qu'il nettoie totalement le plot sur toute sa périphérie.

6. Procédé selon l'une des revendications 3 et 4, caractérisé en ce qu'un faisceau laser est dirigé vers le plot, en face de l'endroit de soudage.

7. Procédé selon l'une quelconque des revendications 3 à 6, caractérisé en ce que le soudage du fil sur le plot est réalisé par le faisceau laser.

## Patentansprüche

1. Festelektrolyt-Tantalkondensator mit einer Tantalanode mit einem sich davon erstreckenden Steiger, einer äußeren Leitung, die an dem Steiger angeschweißt ist, einer dielektrischen Schicht auf der Anode und dem Steiger, und einer Mangandioxyd-Festelektrolytschicht auf der dielektrischen Schicht, dadurch gekennzeichnet, daß die Verschweißung zwischen dem Steiger und der Leitung blankes Metall an blankes Metall ist, ein Flächenabschnitt des Steigers an der Schweißstelle frei von dielektrischer Schicht ist und ein größerer Flächenbereich des Steigers frei von Festelektrolytschicht ist, und daß die Festelektrolytschicht benachbart dem elektrolytfreien Flächenbereich ein niedriges Manganoxyd niedriger Leitfähigkeit ist.

2. Festelektrolyt-Tantalkondensator nach Anspruch 1, dadurch gekennzeichnet, daß der freie Flächenbereich sich vollständig um den Umfang des Steigers erstreckt.

3. Verfahren zum Herstellen eines Festelektrolyt-Tantalkondensators, mit einer Tantalanode mit einem Steiger, der sich davon erstreckt, einer an dem Steiger angeschweißten Leitung, einer dielektrischen Schicht auf der Anode und dem Steiger und einer Mangandioxyd-Festelektrolytschicht auf der dielektrischen Schicht, dadurch gekennzeichnet, daß ein Flächenbereich um die Schweißstelle des Steigers an die äußere Leitung frei von dielektrischer Schicht gemacht wird und ein größerer Flächenbereich des Steigers frei von Festelektrolytschicht gemacht wird, indem man einen Laserstrahl auf den genannten Flächenbereich richtet, um das Dielektrikum und den Festelektrolyt an der genannten Stelle zu verflüchtigen und den Festelektrolyten auf dem Saum des elektrolytfreien Flächenbereiches in ein niederes Manganoxyd geringer Leitfähigkeit umzuwandeln, und daß dann der äußere Leiter an dem Steiger an der Schweißstelle angeschweißt wird.

4. Verfahren nach Anspruch 3, dadurch gekennzeichnet, daß der Laserstrahl zusammen mit einem koaxialen Luftstrom auf den genannten Flächenbereich gerichtet wird.

5. Verfahren nach Anspruch 3 oder 4, dadurch gekennzeichnet, daß der Laserstrahl auf den Steiger zurückreflektiert wird, um den Umfang des Steigers vollständig freizumachen.

6. Verfahren nach Anspruch 3 oder 4, dadurch gekennzeichnet, daß ein zweiter Laserstrahl entgegengesetzt zur Schweißstelle auf den Steiger gerichtet wird.

7. Verfahren nach einem der Ansprüche 3 bis 6, dadurch gekennzeichnet, daß das Anschweißen des Leiters an den Steiger mit Hilfe des Laserstrahls ausgeführt wird.

Fig.1.

Fig.2 (PRIOR ART)

Fig.3.

Fig.4.

Fig.5.